(19) Europäisches Patentamt
European Patent Office
Office européen des brevets

(11) Veröffentlichungsnummer: **0 141 081**
**A2**

(12) # EUROPÄISCHE PATENTANMELDUNG

(21) Anmeldenummer: **84109474.1**

(22) Anmeldetag: **09.08.84**

(51) Int. Cl.[4]: **D 06 M 15/61**
C 08 G 18/28, C 08 G 18/10
C 08 G 18/32, C 07 C 127/00

(30) Priorität: **20.08.83 DE 3330198**

(43) Veröffentlichungstag der Anmeldung:
**15.05.85 Patentblatt 85/20**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Perrey, Hermann, Dr.**
**Rheinaue 8**
**D-4150 Krefeld(DE)**

(72) Erfinder: **Hynek, Bernd**
**Weilersgrund 28**
**D-5024 Pulheim(DE)**

(54) **Verfahren zum Verfestigen von Flächengebilden.**

(57) Bestimmte polyharnstoff-modifizierte Polyetherurethane aus Polyisocyanaten, Polyethern und Polyaminen eigenen sich als Netzmittel für Latices, mit denen Flächengebilde aus natürlichen oder synthetischen Fasern verfestigt werden.

EP 0 141 081 A2

BAYER AKTIENGESELLSCHAFT 5090 Leverkusen, Bayerwerk

Konzernverwaltung RP
Patentabteilung Jo/Hed-c

# Verfahren zum Verfestigen von Flächengebilden

Gegenstand der Erfindung ist ein Verfahren zum Verfestigen von Flächengebilden mit Latices oder Dispersionen, die bestimmte Netzmittel in geringer Dosierung enthalten.

Es ist bekannt, daß zur Benetzung von Flächengebilden aus natürlichen und synthetischen Fasern, z.B. Papier, Vliesstoff, Gewebe, Netzmittel verwendet werden, die entweder bereits in Latices oder Dispersionen, die zur Verfestigung eingesetzt werden, enthalten sind oder vor der Verarbeitung zugesetzt werden.

Die bisher angebotenen Netzmittel neigen dazu, erst bei hoher Dosierung die notwendigen Benetzungseigenschaften zu gewährleisten. Dadurch kommt es bei schnell laufenden Maschinen zu störender Schaumbildung. Außerdem werden durch die hohen Netzmitteldosierungen die Endeigenschaften, wie Trocken- und Naßfestigkeit, Griff, Oberflächenklebrigkeit, Verschweißbarkeit usw., negativ beeinflußt.

Bekannte Netzmittel, die erhöhtes Netzvermögen bei niedriger Dosierung aufweisen, sind für wäßrige Systeme wegen schlechter Wasserlöslichkeit nur bedingt geeignet.

Es wurde nun gefunden, daß mit speziellen polyharnstoffmodifizierten Polyetherurethanen als Netzmittel die obenerwähnten Nachteile nicht auftreten.

Insbesondere werden selbst bei Verwendung von Wachsen sehr gute Benetzungen erzielt.

Gegenstand der Erfindung ist somit ein Verfahren zum Verfestigen von Flächengebilden aus natürlichen oder synthetischen Fasern mit synthetischen wäßrigen Polymerdispersionen, die ein Netzmittel enthalten, durch Aufbringen der Dispersionen auf das Flächengebilde und Entfernen des Wassers, dadurch gekennzeichnet, daß man als Netzmittel Verbindungen der Formel I

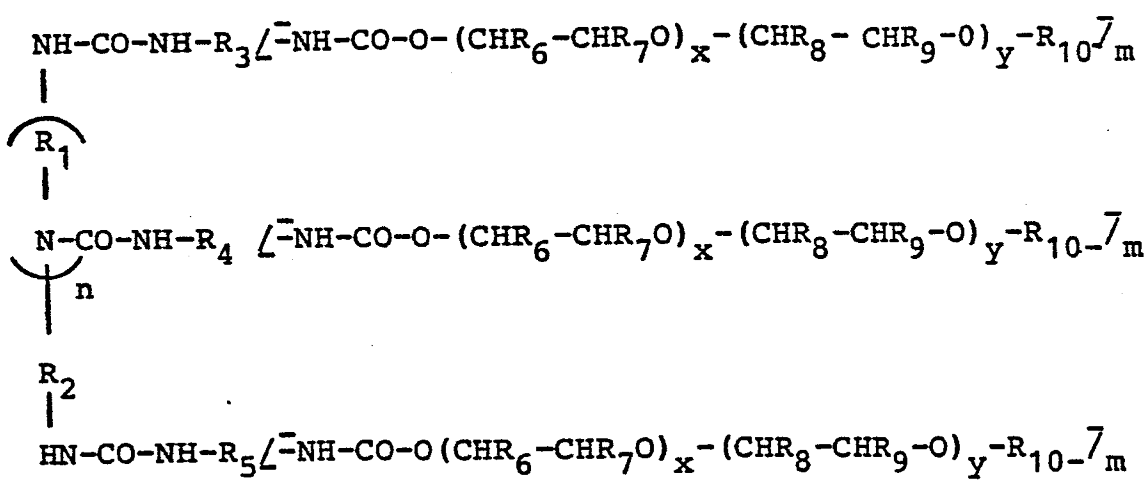

I

in der

$R_1$ und $R_2$ unabhängig voneinander $C_2$ bis $C_4$-Alkylen oder $C_3$ bis $C_{14}$-Cycloalkylen,

$R_3$,$R_4$ und $R_5$ unabhängig voneinander gegebenenfalls substituiertes Alkylen, Cycloalkylen oder Arylen,

$R_6$,$R_7$,$R_8$ und $R_9$ unabhängig voneinander Wasserstoff oder Methyl,

$R_{10}$ $C_1$ bis $C_{18}$-Alkyl, $C_6$ bis $C_{18}$-Aryl, $C_7$ bis $C_{18}$-Aralkyl oder $C_2$ bis $C_{18}$-Alkenyl bedeuten,

n für die Zahlen 0 bis 50,
m für die Zahlen 1 bis 4,
x für die Zahlen 5 bis 100 und
y für die Zahlen 0 bis 100 stehen,

zusetzt.

Geeignete Alkylenreste $R_3$, $R_4$ und $R_5$ sind solche mit 1 bis 18 C-Atomen, geeignete Cycloalkylenreste $R_3$, $R_4$ und $R_5$ sind solche mit 5 oder 6 Ringkohlenstoffatomen und geeignete Arylenreste $R_3$, $R_4$ und $R_5$ sind Phenylen- und Naphthylenreste, wobei die genannten Reste beispielsweise Urethan-, Uretdion-, Biuret- oder Isocyanursäurereste enthalten können. Die Aryl- und Cyclo-

alkylreste können ferner durch $C_1$-$C_4$-Alkyl oder Chlor substituiert sein.

Bevorzugte Netzmittel entsprechen der Formel II

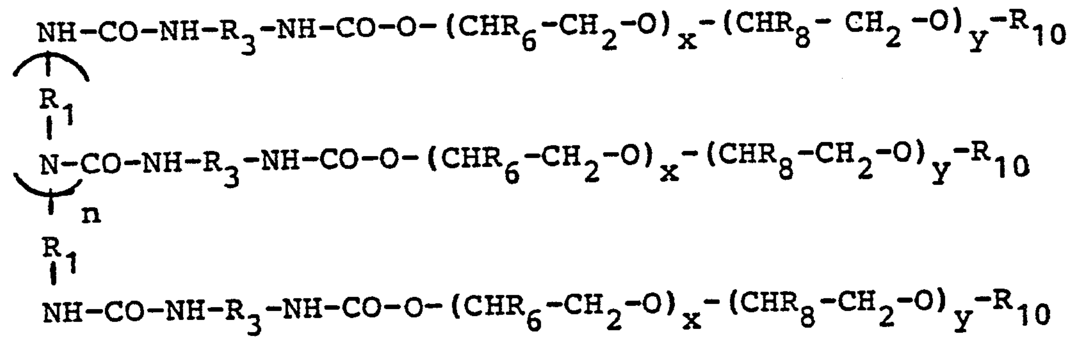

II

in der

$R_1$ $C_2$ bis $C_7$-Alkylen oder $C_5$ bis $C_7$-Cycloalkylen,
$R_3$ $C_6$bis $C_{20}$-Alkylen oder gegebenenfalls durch $C_1$-$C_4$-Alkyl oder Halogen substituiertes $C_6$-$C_{20}$-Cycloalkylen oder -Arylen,

$R_6$ und $R_8$ Wasserstoff oder Methyl,

$R_{10}$ $C_1$ bis $C_6$-Alkyl bedeuten,

n für die Zahlen 0 bis 5 und

x und y für die Zahlen 5 bis 100 stehen,

wobei die Einheiten ($CHR_6$-$CH_2$-O) und ($CHR_8$-$CH_2$-O) in Blöcken, statistisch verteilt oder teilweise in Blöcken und teilweise statistisch verteilt vorliegen.

Bei ganz besonders bevorzugten Netzmitteln stehen in der Formel II

$R_1$ für $C_2$ bis $C_3$-Alkylen,

$R_3$ für $C_6$ bis $C_{13}$-Alkylen, gegebenenfalls durch Methyl substituiertes $C_6$ bis $C_{13}$-Cycloalkylen oder $C_6$ bis $C_{13}$-Arylen,

$R_6$ für Wasserstoff
$R_8$ für Methyl

n für die Zahlen 1 bis 5,

x für die Zahlen 5 bis 50 und

y für die Zahlen 5 bis 40,

und die Einheiten ($CH_2$-$CH_2$-O) und ($CH(CH_3)$-$CH_2$-O) liegen statistisch oder teilweise in Blöcken und teilweise statistisch verteilt vor.

Die erfindungsgemäßen polyharnstoffmodifizierten Polyetherpolyurethane erhält man durch Umsetzung von (m+1)-wertigen Polyisocyanaten mit Polyethern der Formel (III)

$$HO-(CHR_6-CHR_7-O)_x-(CHR_8-CHR_9-O)_y-R_{10}$$

III

und Polyaminen der Formel IV

$$NH_2-(R_1-NH)_n-R_2-NH_2,$$

IV

wobei die Reste $R_1$, $R_2$, $R_6$, $R_7$, $R_8$, $R_9$ und $R_{10}$ und die Zahlen m, n, x und y die oben angegebene Bedeutung besitzen.

Die zur Herstellung der polyharnstoffmodifizierten Polyetherpolyurethane verwendeten Polyisocyanate können aliphatisch, cycloaliphatisch oder aromatisch sein. Als Beispiele für geeignete Polyisocyanate seien Hexamethylendiisocyanat, Cyclohexan-1,4-diisocyanat, 2,4- und 2,6-Toluylendiisocyanat und deren Gemische, 1-Isocyanatomethyl-5-isocyanato-1,3,3-trimethylcyclohexan, (2,2,4- bzw. 2,4,4-Trimethylhexamethylendiisocyanat-1,6), 1,5-Naphthalin-diisocyanat, 1,3-Cyclopentylendiisocyanat, m- und p-Phenylen-diisocyanat, 2,4,6-Toluylentriisocyanat, 4,4',4"-Triphenylmethantriisocyanat, 1,3- und 1,4-Xylylendiisocyanat, 3,3'-Dimethyl-4,4'-diphenylmethandiisocyanat,

4,4'-Diphenylmethandiisocyanat, 3,3'-Dimethylbiphenylendiisocyanat, 4,4'-Biphenylendiisocyanat, Durendiisocyanat, 1-Phenoxy-2,4'-phenylendiisocyanat, 1-Tert.-butyl-2,4-phenylendiisocyanat, Methylen-bis-4,4'-cyclohexyldiisocyanat, 1-Chlor-2,4-phenylendiisocyanat und 4,4'-Diphenyletherdiisocyanat genannt.

Weiterhin ist es möglich, höhermolekulare und gegebenenfalls auch höherfunktionelle Polyisocyanate, die aus niedermolekularen Grundkörpern durch Polymerisationsreaktion zu Uretdionen oder Isocyanuratderivaten hergestellt werden, einzusetzen. Beispielsweise seien das Uretdion aus 2 Mol 2,4-Toluylendiisocyanat und die isocyanuratringhaltigen Polymerisationsprodukte aus 2,4- und 2,6-Toluylendiisocyanat oder Hexamethylendiisocyanat, ein durchschnittlich 2 Isocyananuratringe im Molekül enthaltenes und aus 5 Mol Toluylendiisocyanat gebildetes System oder ein entsprechendes Derivat aus durchschnittlich 2 Mol Toluylendiisocyanat und 3 Mol Hexamethylendiisocyanat, erwähnt.

Nach einer weiteren Aufbaumethode ist es möglich, aus Di- oder Polyisocyanaten durch partielle Hydrolyse über die Stufe der Carbamidsäure und des Amins höhere biuretverknüpfte Systeme herzustellen, z.B. eine biuretverknüpfte Verbindung, die formal aus 3 Mol Hexamethylendiisocyanat unter Zusatz von 1 Mol Wasser und Abspaltung

von 1 Mol Kohlendioxid entstanden ist.

Ebenfalls geeignete Polyisocyanate erhält man bei der Umsetzung von Di- oder Polyolen mit di- oder polyfunktionellen Isocyanaten, wenn das Molverhältnis von Hydroxyverbindungen zum Isocyanat so gewählt wird, daß bei den statistisch gebildeten Reaktionsprodukten stets freie NCO-Funktionen vorhanden bleiben und ein Molgewicht von 2000 bis 3000 nicht überschritten wird.

Alle oben beschriebenen Di- und Polyisocyanate können in dieser Weise mit Di- und Polyolen, wie Mono- und Polyethylenglykol, Propandiolen, Butandiolen, Neopentylglykol und andere Pentandiolen, Adipol, Hexandiolen, Cyclohexandiolen, 1,4-Dihydroxymethylcyclohexan, Perhydrobisphenol-A, Glycerin, Trimethylolethan, Trimethylolpropan, anderen Hexantriolen und Pentaerythrit, unter den beschriebenen Voraussetzungen umgesetzt werden. Bevorzugt werden die Umsetzungen von Di- und Polyolen mit Toluylendiisocyanat, bei denen pro OH-Funktion 1 Mol des Diisocyanats zur Reaktion kommt.

Bevorzugt werden als Polyisocyanate Diisocyanate, insbesondere Hexamethylendiisocyanat, Isophorondiisocyanat, Toluylendiisocyanat und Diphenylmethandiisocyanat eingesetzt.

Die zur Herstellung der erfindungsgemäßen harnstoffgruppenhaltigen Polyetherurethane verwendeten Polyether erhält

man durch Polyalkoxylierung von Alkoholen, Phenolen und Alkylphenolen mit bis zu 18 C-Atomen. Als Alkohole sind hierbei alle gesättigten oder ungesättigten aliphatischen, cycloaliphatischen sowie araliphatischen Hydroxyverbindungen mit 1-18 C-Atomen geeignet, die rein oder in Form von Gemischen zur Polyalkoxylierung eingesetzt werden können.

Als Alkylenoxide zur Polyalkoxylierung kommen z.B. Ethylenoxid, Propylenoxid, 1,2- und 2,3-Epoxybutan oder Epichlorhydrin in Frage.

Bevorzugte Polyether erhält man durch Polyalkoxylierung niederer Alkohole, wie Methanol, Ethanol, Propan-, Butan-, Pentan- oder Hexanole, mit Ethylen- und Propylenoxid. Hierbei können Blockpolymere oder Polymere mit statistischer Verteilung der Oxyalkylgruppen, sog. Mischpolymere, oder auch Mischformen dieser beiden Möglichkeiten hergestellt werden. Bevorzugt sind Mischpolymere und solche Produkte, bei denen die Alkohole zunächst mit einer Mischung aus Propylenoxid und 80 - 90 % der gesamten Menge des Ethylenoxids zu Mischpolymeren umgesetzt werden und hierauf die restlichen 10 - 20 % des Ethylenoxids eingebracht werden, so daß die Endgruppen dieser Polyether nahezu vollständig primäre OH-Gruppen sind. Bevorzugte Polyether enthalten 40-60 Gew.-% Ethylenoxid, besonders bevorzugte sind aus gleichen Gewichtsmengen Ethylen- und Propylenoxid aufgebaut. Bevorzugt werden Polyether mit Molekulargewichten von 600-5000, besonders bevorzugt mit 700 bis 3000 eingesetzt.

Als zur Herstellung der erfindungsgemäßen polyharnstoffmodifizierten Polyetherpolyurethane geeignete aliphatische oder cycloaliphatische Amine seien Ethylendiamin, Diethylentriamin, Triethylentetramin, Tetraethylenpentamin, Pentaethylenhexamin, Polyethylenimin, 1,2- und 1,3-Propylendiamin, Dipropylentriamin, Tripropylentetramin, Butylendiamin, Hexamethylendiamin, 2,5-Diamino-2,5-dimethylhexan, 2,2,4- und 2,4,4-Trimethyl-1,6-hexandiamin, Cyclohexandiamin, Isophorondiamin, hydrierte Toluylendiamine und hydrierte Diaminodiphenylmethane genannt.

Bevorzugte Polyamine sind tri- und höherfunktionell. Diethylentriamin, Triethylentetramin, Tetraethylenpentamin und Pentaethylenhexamin sind besonders bevorzugt.

Die Umsetzung der Polyisoycanate mit den Polyethern und den Polyaminen kann zwar so durchgeführt werden, daß zu dem vorgelegten Polyisocyanat eine Mischung aus Polyether und Polyamin getropft wird oder umgekehrt zu einer Mischung aus Polyether und Polyamin das Polyisocyanat getropft wird, doch führen diese Verfahrensweisen häufig zu unlöslichen Ausscheidungen, daher wird vorzugsweise 2-stufig gearbeitet. Zunächst wird der Polyether mit dem Polyisocyanat umgesetzt und hierauf die restlichen Isocyanatgruppen mit dem Polyamin zur Reaktion gebracht.

Bei der Umsetzung des Polyethers mit dem Polyisocyanat wird vorteilhaft das Polyisocyanat vorgelegt und der Polyether zugetropft. Zur Herstellung reproduzierbarer Produkte ist es wichtig, daß die Polyether stets wasserfrei eingesetzt werden. Die Reaktion kann in inerten Lösungsmitteln, wie Benzol, Toluol, Xylol, Chlorbenzol, o-Dichlorbenzol, Aceton und Essigester oder auch lösungsmittelfrei durchgeführt werden; vorzugsweise wird im Temperaturbereich zwischen 0 und 140°C gearbeitet. Alle bei der Urethanbildung wirksamen Katalysatoren (s. Houben-Weyl, Methoden der organischen Chemie, Bd. 14.2, Seite 61, 4. Auflage, 1963), wie Pyridin, Methylpyridin, N,N'-Dimethylpiperazin, N,N-Dimethylbenzylamin oder N,N'-Endoethylenpiperazin, können verwendet werden.

Bei den Formeln I und II handelt es sich um idealisierte Strukturen. Je nach der Reaktivität der Reaktionsteilnehmer kommt es zur Ausbildung von Polymergemischen. Werden allerdings Diisocyanate mit Isocyanatgruppen unterschiedlicher Reaktivität eingesetzt, wie 2,4-Toluylendiisocyanat oder Isophorondiisocyanat, so ist es bei der Umsetzung mit den Polyethern möglich, in hohen Ausbeuten zunächst nur die reaktivere Isocyanatgruppe des Moleküls umzusetzen. Die als Nebenreaktion mögliche Bildung des Reaktionsproduktes aus 2 Mol Polyether und 1 Mol Diisocyanat neben einem Mol freiem Diisocyanat kann durch schonende Reaktionsbedingungen in erheblichem Maße unterdrückt werden, so daß nach der Umsetzung mit den Polyaminen weitgehend die Verbindungen gemäß Formeln I und II erhalten werden.

Werden jedoch Diisocyanate mit Isocyanatgruppen gleicher Reaktivität eingesetzt, wie Hexamethylendissocyanat oder 4,4'-Diphenylmethandiisocyanat, so kommt es bei der Reaktion mit dem Polyether zu einem Reaktionsgemisch aus 1:1-, 1:2-Additionsprodukt und unumgesetztem Diisocyanat, das nach Reaktion mit dem Polyamin somit zu einem Produktgemisch aus dem 1:2-Additionsprodukt aus 1 Mol Diisocyanat und 2 Mol Polyether, aus Verbindungen gemäß Formel I bzw. II und insbesondere auch aus höhermolekularen Bestandteilen führt. Diese höhermolekularen Bestandteile werden dadurch aufgebaut, daß Molekülteile, bei denen nicht alle NH-Gruppen des Polyamins über Diisocyanate mit Polyethern verbunden sind, über die noch nicht umgesetzten NH-Gruppen mit den freien Diisocyanaten zu höhermolekularen Polyharnstoffen reagieren. Produkte bei denen die stöchiometrischen Verhältnisse bis zu 30% von den durch die Formeln angegebenen Verhältnissen abweichen, sind aber immer noch gut geeignet. Hierbei sind die stöchiometrischen Verhältnisse bevorzugt, bei denen die molmäßige Summe der OH- und NH-Gruppen gleich der der Isocyanatgruppen ist.

In der Regel liegen die erfindungsgemäßen Verbindungen als wasserlösliche oder wasseremulgierbare Öle vor. Da ihre Wirksamkeit als Netzmittel mit guter Verteilung steigt, ist es manchmal zur Verbesserung der Verteilbarkeit angebracht, gängige Emulgatoren, z.B. Alkylarylsulfonate, Alkylsulfate, Fettsäuresalze, Alkylphenol-, Fettalkoholethoxylate oder dergleichen zuzufügen.

Die Latices und Dispersionen können aus folgenden copolymerisierbaren Monomeren in üblicher Weise hergestellt werden:

a) Ester der Acryl- und Methacrylsäure mit 1 - 18 C-Atomen, vorzugsweise 1 - 8 C-Atomen, in der Alkoholkomponente, beispielsweise Methylacrylat, Methylmethacrylat, Ethylacrylat, n-Butylacrylat, Isobutylacrylat, 2-Ethyl-hexylacrylat sowie deren Mischungen;

b) Vinylaromaten oder Vinylidenaromaten, wie gegebenenfalls durch Halogen oder $C_1$-$C_4$-Alkyl substituiertes Styrol, z.B. Styrol, α-Methylstyrol, p-Methylstyrol, p-Isopropylstyrol und p-Chlorstyrol;

c) Vinylester von 2 - 8 C-Atome enthaltenden Carbonsäuren, insbesondere Vinylacetat, Vinylpropionat, Vinylbutyrat und Vinylbenzoat;

d) α,ß-ungesättigte Carbonsäureamide mit 3 - 5 C-Atomen, wie Acrylamid und Methacrylamid sowie deren N-Hydroxymethylverbindungen und deren Alkylether mit 1 - 8 C-Atomen, insbesondere 1 - 4 C-Atomen im Etheralkylrest, wie N-Hydroxymethylmethacrylamid, N-Hydroxymethylacrylamid, N-Butoxymethylacrylamid, N-Butoxymethylmethacrylamid; Ester der Carbamidsäure;

e) Dienkohlenwasserstoffe mit 4 - 6 C-Atomen und insbesondere konjugierte Diene, z.B. Butadien-1,3, Isopren, Piperylen, Hexadien-1,3, Chlorbutadien-1,3, 1,2-Dichlorbutadien-1,3;

f) α,β-ungesättigte Nitrile, wie (Meth)Acrylnitril; α,β-ungesättigte Monocarbonsäuren, wie Acryl- Itacon- oder Methacrylsäure; α,β-ungesättigte Halogenide, wie Vinylchlorid, Vinylfluorid und Vinylbromid.

Aus diesen Monomeren lassen sich Homo- und Copolymerisate herstellen, wobei Copolymerisate bevorzugt sind.

Die Latices und Dispersionen haben einen Feststoffgehalt von 10 - 70 Gew.-%.

Als Fasern der Flächengebilde können allein oder gemischt Polyesterfasern, Polyamidfasern, Polypropylenfasern, Polyvinylchloridfasern, Polyurethanfasern, Polyvinylalkoholfasern, Glasfasern, Cellulosefasern natürlicher und synthetischer Herkunft und andere Naturfasern eingesetzt werden.

Die Feinheiten und Faserlängen richten sich nach dem Einsatzzweck und der maschinellen Verarbeitbarkeit.

Üblicherweise werden Stapelfasern mit Längen zwischen 2 - 100 mm und Feinheiten zwischen 0,5 und 300 dtex verwendet. Als Flächengebilde kommen in Frage: Papiere, Gewebe, Vliesstoffe, Nähwirkstoffe, Nadelfilze, Teppiche, Mineralfaserplatten, Leder- und Celluloseplatten.

Die Verfestigung der beschriebenen Flächengebilde kann durch Imprägnieren, Streichen, Drucken und/oder Sprühen in ein- oder mehrstufiger, auch gemischter Verfahrensweise erfolgen.

Zur Viskositätsregulierung der Mischungen können Polyacrylate, Methylcellulosen, Carboxymethylcellulosen und Alginate eingesetzt werden.

Es ist nicht erforderlich, aber es können auch Vulkanisiermittel, Beschleuniger, Zinkoxide, Geliermittel, Harze, Weichmacher, Thermoplaste, Füllstoffe, Pigmente organischer und anorganischer Herkunft und andere übliche Hilfsprodukte zugesetzt werden.

Beim Einsatz der Verbindungen der Formel I kann, je nach Anforderung, Applikationsmethode und nach Zusammensetzung der verwendeten Latices und Dispersionen und des vorgegebenen Flächengebildes, eine Menge zwischen 0,1 - 4 Gew.-%, bezogen auf den Feststoffgehalt der eingesetzten Latices und Dispersionen, zugegeben werden. Die Einsatzmenge der Verbindungen der Formel I, bezogen auf Flächengebilde, errechnet sich durch die vorgegebene Bindemittelaufnahme die zwischen 2 und 400 % trocken betragen kann.

Die Beurteilung der Benetzung und damit der gleichmäßigen Binderverteilung ließ sich durch Zugabe von organischen Pigmenten optisch darstellen und visuell einwandfrei beurteilen. Auch bei gleichzeitiger Verwendung von Paraffinwachsemuslion wurde die Netzwirkung sofort optisch erkennbar.

In diesem Zusammenhang wurde bei Vliesstoffen nach der Imprägnierung die Bindemittelverteilung an der Oberfläche und über den Querschnitt bei Praxisversuchen beurteilt.

Die Oberflächenspannung der erfindungsgemäßen Netzmittel betrugen bei einer Konzentration von

| | | |
|---|---|---|
| 0,1 % | 37,7 | (dyn/cm) |
| 1,0 % | 37,5 | " |
| 5,0 % | 37,2 | " |

Gemessen wurde auf einem du Nouy-Spannungsmesser bei 25°C.

Beispiel 1

In eine Lösung aus 174 g (1 Mol) 2,4-Toluylendiisocyanat und 0,17 g Dibutyldizinnlaurat fügte man bei 50°C innerhalb einer Stunde 1273 g (1 Mol) eines Polyethers der OH-Zahl 44, der durch Alkoxylierung von Butanol mit gleichen Gewichtsmengen Ethylen- und Propylenoxid hergestellt wurde, wobei zunächst 80 % der Ethylenoxid- mit der gesamten Propylenoxidmenge im Gemisch und hierauf die restlichen 20 % des Ethylenoxids umgesetzt wurden, und ließ ca. 2 h nachreagieren.

Nachdem somit 1 Mol Isocyanat zum Urethan reagiert hatte (Kontrolle über Isocyanatzahlbestimmung) tropfte man 34,4 g (0,33 Mol) Diethylentriamin bei 50°C hinzu und ließ 2 h nachreagieren. Man isolierte eine schwachgelbe, ölige, in Wasser lösliche Flüssigkeit.

Beispiel 2

Analog Beispiel 1 wurden anstelle von Toluylendiisocyanat 221 g (1 Mol) 1-Isocyanatomethyl-5-isocyanato-1,3,3-trimethyl-cyclohexan eingesetzt.

Beispiel 3

Analog Beispiel 1 wurden anstelle von Toluylendiisocyanat 250 g (1 Mol) 4,4'-Diisocyanatodiphenylmethan eingesetzt.

Beispiel 4 -

Analog Beispiel 1 wurden anstelle von 0,33 Mol Diethylentriamin 38,7 g (0,167 Mol) Pentaethylenhexamin eingesetzt. Man erhält ein bei Zimmertemperatur hochviskoses Öl.

Beispiel 5

Analog Beispiel 1 wurden anstelle des Polyethers der OH-Zahl 44 1870 g (1 Mol) Polyether der OH-Zahl 30 eingesetzt, der ebenfalls durch Alkoxylierung von Butanol mit gleichen Gewichtsmengen Ethylen- und Propylenoxid hergestellt wurde, wobei zunächst 80 % der Ethylenoxid- mit der gesamten Propylenoxidmenge im Gemisch und hierauf die restlichen 20 % des Ethylenoxids umgesetzt wurden.

Das Reaktionsprodukt löste sich klar in Wasser.

Beispiel 6

Unter den in Beispiel 1 beschriebenen Reaktionsbedingungen wurden zunächst 168 g (1 Mol) Hexamethylendiisocyanat mit 801 g (1 Mol) eines Polyethers der OH-Zahl 70, der durch Alkoxylierung von Butanol mit gleichen Gewichtsmengen Ethylen- und Propylenoxid hergestellt wurde, und hierauf mit 34,4 g (0,33 Mol) Diethylentriamin umgesetzt.

Beispiel 7

Unter den in Beispiel 1 beschriebenen Reaktionsbedingungen wurden zunächst 168 g (1 Mol) Hexamethylendiisocyanat mit 1273 g (1 Mol) des in Beispiel 1 beschriebenen Polyethers der OH-Zahl 44 und hierauf mit 34,4 g (0,33 Mol) Diethylentriamin umgesetzt. Das Reaktionsprodukt löste sich klar in Wasser.

Beispiel 8

Eine wäßrige Dispersion mit einem Feststoffgehalt von 43 Gew.-% und einem pH-Wert von 7, enthaltend als Feststoff ein Polymerisat aus 45 Gew.-% Butadien, 45 Gew.-% Styrol, 3 Gew.-% Acrylnitril, 3 Gew.-% N-Methylolacrylamid und 3 Gew.-% Methacrylsäure wurde mit 1 Gew.-%, bezogen auf Feststoff, des Produktes gemäß Beispiel 1 versetzt und mit Wasser auf einen Feststoffgehalt von 20 Gew.-% verdünnt.

Diese Dispersion wurde auf ein Faservlies aus 100 % Polyesterfasern 1,7 dtex, 40 mm Stapellänge, Flächengewicht 50 $g/m^2$ (genadelt 40 $Stiche/cm^2$) aufgebracht. Die Benetzung war einwandfrei, d.h. es wurde kein Aufspalten und Aufrauhen des Faservlieses beobachtet. Das Vlies wurde bei 130°C getrocknet. Die Trockenaufnahme betrug 20 Gew.-%, bezogen auf Vliesgewicht.

Nach dem Trocknen wurde zur Vernetzung kurzzeitig auf 150°C erhitzt.

Beispiel 9 (Vergleichsbeispiel)

Dispersion, Faservlies und Bedingungen entsprachen Beispiel 8, jedoch ohne Zusatz des Produktes gemäß Beispiel 1.

Es ließ sich keine einwandfreie Imprägnierung bewerkstelligen, d.h. das Faservlies spaltete sich in zwei Lagen und die Faservliesoberfläche wurde stark aufgerauht.

Beispiel 10 (Vergleichsbeispiel)

Dispersion, Faservlies und Bedingungen entsprachen Beispiel 8, jedoch wurden anstelle des Zusatzes gemäß Beispiel 1 3 Gew.-% einer 20 %igen wässrigen Lösung eines handelsüblichen Netzmittels auf Basis Polyoxethylen und Polyoxypropylens, mit einem Molekulargewicht von 3250, zugesetzt.

Die Imprägnierung war ebenfalls nicht einwandfrei, d.h. es kam zu einer Aufrauhung der Faservliesoberfläche.

Beispiel 11

Eine wässrige Dispersion mit einem Feststoffgehalt von 50 % und einem pH-Wert von 8,5, enthaltend als Feststoff ein Polymerisat aus 44 Gew.-% Butadien, 49 Gew.-% Styrol, 3 Gew.-% Acrylnitril, 2 Gew.-% Methacrylsäure und 2 Gew.-% N-Methylolacrylamid wurde mit 1 Gew.-%, bezogen auf Feststoff, des Produktes gemäß Beispiel 2 versetzt.

Dieser Dispersion wurden vorher 30 Gew.-% einer handelsüblichen 50 gew.-%igen Paraffinwachsemulsion zur Verbesserung des hydrophoben Endeigenschaften zugesetzt.

Diese Dispersion wurde auf ein Papier, bestehend aus 30 Gew.-% Sulfatcellulose und 70 Gew.-% Linters (Baumwolle), Flächengewicht 49 $g/m^2$, aufgebracht.

Trotz des Zusatzes eines Paraffinwachsemulsion ließ sich eine einwandfreie Binderaufnahme und -verteilung erreichen. Die Trocknung erfolgt bei 130°C. Die Trockenaufnahme betrug 66 % bezogen auf Papiergewicht.

Nach dem Trocknen wurde zur Vernetzung kurzzeitig auf 150°C erhitzt.

<u>Beispiel 12</u> (Vergleichsbeispiel)

Dispersion, Papier und Bedingungen entsprachen Beispiel 11, jedoch ohne Zusatz des Produktes gemäß Beispiel 2. Eine gleichmäßige Imprägnierung war nicht möglich.

<u>Beispiel 13</u> (Vergleichsbeispiel)

Dispersion, Papier und Bedingungen entsprachen Beispiel 11, jedoch anstelle des Produktes gemäß Beispiel 2, wurden 5 Gew.-% einer 20 %igen wässrigen Lösung eines handelsüblichen Netzmittels auf Basis Polyoxyethylen und Polyoxypropylen mit einem Molekulargewicht von 2250, zugesetzt.

Durch diesen Zusatz konnte keine gleichmäßige Benetzung des imprägnierten Papieres erreicht werden.

Patentansprüche

1. Verfahren zum Verfestigen von Flächengebilden aus natürlichen oder synthetischen Fasern mit synthetischen wäßrigen Polymerdispersionen, die ein Netzmittel enthalten, durch Aufbringen der Dispersionen auf das Flächengebilde und Entfernen des Wassers, dadurch gekennzeichnet, daß als Netzmittel Verbindungen der allgemeinen Formel

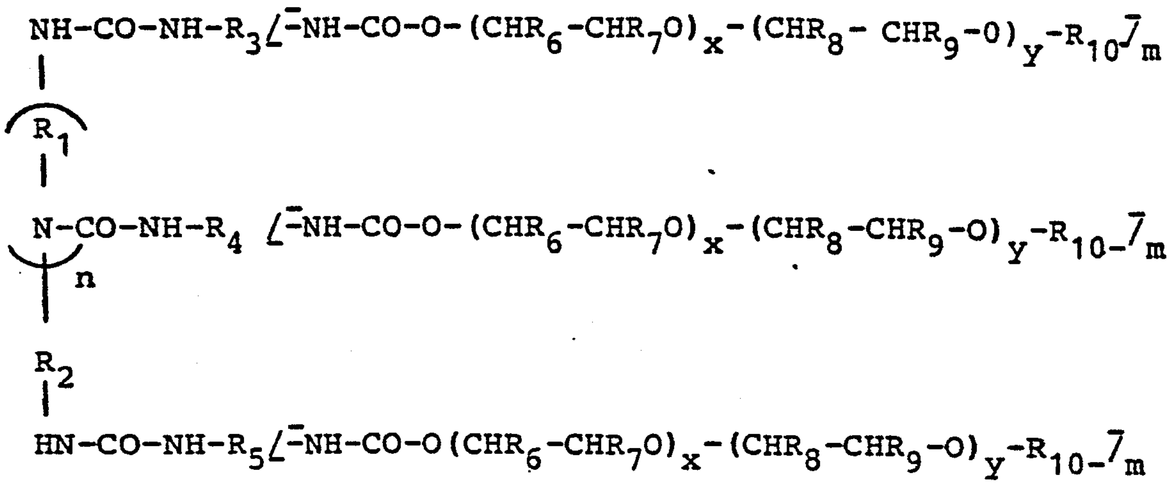

in der

$R_1$ und $R_2$ unabhängig voneinander $C_2$ bis $C_4$-Alkylen oder $C_3$ bis $C_{14}$-Cycloalkylen,

$R_3$, $R_4$ und $R_5$ unabhängig voneinander gegebenenfalls substituiertes Alkylen, Cycloalkylen, oder Arylen,

$R_6$, $R_7$, $R_8$ und $R_9$ unabhängig voneinander Wasserstoff oder Methyl,

$R_{10}$ $C_1$ bis $C_{18}$-Alkyl, $C_6$ bis $C_{18}$-Aryl, $C_7$ bis $C_{18}$-Aralkyl oder $C_2$ bis $C_{18}$-Alkenyl bedeuten,

n für die Zahlen 0 bis 50,
m für die Zahlen 1 bis 4,
x für die Zahlen 5 bis 100 und
y für die Zahlen 0 bis 100 stehen.

eingesetzt werden.

2. Verfahren nach Anspruch 1, dadurch gekennzeichnet, daß als Netzmittel Verbindungen der allgemeinen Formel

$$NH-CO-NH-R_3-NH-CO-O-(CHR_6-CH_2-O)_x-(CHR_8-CH_2-O)_y-R_{10}$$
$$|$$
$$R_1$$
$$|$$
$$\left[N-CO-NH-R_3-NH-CO-O-(CHR_6-CH_2-O)_x-(CHR_8-CH_2-O)_y-R_{10}\right]_n$$
$$|$$
$$R_1$$
$$|$$
$$NH-CO-NH-R_3-NH-CO-O-(CHR_6-CH_2-O)_x-(CHR_8-CH_2-O)_y-R_{10}$$

in der

– $R_1$ $C_2$ bis $C_7$-Alkylen oder $C_5$ bis $C_7$-Cycloalkylen,

$R_3$ $C_6$ bis $C_{20}$-Alkylen oder gegebenenfalls durch $C_1$-$C_4$-Alkyl oder Halogen substituiertes $C_6$-$C_{20}$-Cycloalkylen oder -Arylen,

$R_6$ und $R_8$ Wasserstoff oder Methyl,

$R_{10}$ $C_1$ bis $C_6$-Alkyl bedeuten,

n für die Zahlen 0 bis 5 und

x und y für die Zahlen 5 bis 100 stehen,

wobei die Einheiten ($CHR_6$-$CH_2$-O) und ($CHR_8$-$CH_2$-O) in Blöcken, statistisch verteilt oder teilweise in Blöcken und teilweise statistisch verteilt vorliegen, eingesetzt werden.

3. Verfahren gemäß Anspruch 2, wobei

$R_1$ für $C_2$ bis $C_3$-Alkylen,

$R_3$ für $C_6$ bis $C_{13}$-Alkylen, gegebenenfalls durch Methyl substituiertes $C_6$ bis $C_{13}$-Cycloalkylen oder $C_6$ bis $C_{13}$-Arylen

$R_6$ für Wasserstoff

$R_8$ für Methyl

n für die Zahlen 1 bis 5,

x für die Zahlen 5 bis 50 und

y für die Zahlen 5 bis 40 stehen,

und die Einheiten $(CH_2-CH_2-O)$ und $(CH(CH_3)-CH_2-O)$ statistisch oder teilweise in Blöcken und teilweise statistisch verteilt vorliegen.